# EUROPEAN PATENT SPECIFICATION

(11) **EP 3 844 886 B1**
(45) Date of publication and mention of the grant of the patent: **12.03.2025**
(21) Application number: 19765820.6
(22) Date of filing: 09.08.2019
(51) Int. Cl.: H04B 3/54

(54) **COMMUNICATION SYSTEM BETWEEN THE DOOR AND THE BODY OF THE OVEN**
KOMMUNIKATIONSSYSTEM ZWISCHEN DER TÜR UND DEM KÖRPER DES OFENS
SYSTÈME DE COMMUNICATION ENTRE LA PORTE ET LE CORPS DU FOUR

(30) Priority: 29.08.2018 PL 42684018
(43) Date of publication of application: 07.07.2021
(73) Proprietor: Amica S.A., 64-510 Wronki (PL)
(72) Inventor: MIZERSKI, Lukasz, 64-310 Lwowek (PL); WOJNAROWSKI, Lukasz, 62-571 Stare Miasto (PL); SWITALA, Wojciech, 62-081 Baranowo (PL)
(74) Representative: Gornicki, Pawel
(86) International application number: PCT/PL2019/000067
(87) International publication number: WO 2020/046151

(56) References cited:
- EP-A1- 3 348 909
- US-A- 5 089 974

## Description

The present invention is a communication system between the door and the body of the oven, intended for bidirectional transmission of information between an electronic module that controls the operation of the appliance, located in its body, and electronic modules located in the door or door handle of the oven, receiving signals from the user of the appliance and transmitting these signals to the electronic control unit, and allowing for the transmission of signals from the electronic control unit, informing the user on status of the appliance.

In known solutions used in household appliances, communication between the door and the body of the appliance is enabled by the wireless transmission modules installed in the communicating components of the appliance or data are transmitted via dedicated wire bundle. The international patent WO2016105312A describes a dishwasher, which has a capacity touch sensor on the door cover. When the user touches the door cover, the sensor transmits a signal to the control system, which enables the door opening mechanism. The capacity touch sensor and the control unit are located in the appliance door. In the description of the solutions, the connection method between the sensor and the power supply system inside the body of the dishwasher is not indicated, thus it is assumed that they are connected via a dedicated wire bundle.

In the European patent application EP3136002 we find a description of the oven, wherein data between the door and the body of the appliance are transmitted via wireless communication Wi-Fi, Bluetooth or ZigBee. Power to the module installed in the door is supplied through a contact strip, which connects to the body of the oven with the door when the door is closed. Upon opening the door, there is no electrical connection between the door and the body of the appliance.

Document US5089974A discloses a building power management controller comprises a plurality of modules connected by a two-wire network. Each module comprises a data transceiver device, controlled by a microprocessor to both transmit data to the other modules and to a central unit via the two-wire network, and to receive information via this two-wire network. The modules are supplied with power by the two-wire network. When two modules transmit simultaneously, one takes priority so as not to disturb the messages transmitted.

The state of the art closest to the subject of the present invention is described in the European patent application EP 3 348 909 A1. This document discloses a communication system between the door and the body of the oven, comprising an electronic control unit located in the body of the oven and an electronic user module, wherein the control unit takes from the power grid AC voltage of 230 VAC and after conversion to DC voltage of 12 VDC, transmits it to the isolated from the oven housing hinge housings mounted inside the body of the oven hinged to the oven door and further through the conductive element connecting hinge housings to metal door components that are electrically connected to the user electronic module.

Data transfer between the body and the door via a dedicated wire bundle complicates the oven design, makes it impossible to dismantle the door, for example, to clean the appliance. In addition, wire bundle connecting the door and the body of the appliance is subject to repeated bending during door opening and closing, which significantly reduces the life of the connecting cables.

The use of wireless communication requires that electronic modules must be equipped with systems enabling wireless communication, which complicates their design. In order to supply power to the electronic module in the door of the oven, it is also required to install an additional power source, such as battery. In addition, wireless communication is more susceptible to interference and increases the congestion of ISM bands used by Wi-Fi, Bluetooth or ZigBee.

The purpose of the present invention is to develop a system for electronic modules communication, where one module is located in the body and the other in the oven door, using the existing components and electrical connections of the oven.

This objective has been achieved by using the existing electric circuit to transfer data between the body and door of the oven, connected to the power source in the body of the oven and supplying power to electrical receivers in the door of the oven described in the Polish patent PL 227417.

Communication system between a door and a body of the oven according to the invention comprising of an electronic control unit located in the body of the oven and an electronic user module that receives signals from the user and showing the user the status of the appliance, which is located in the door of the oven, and transmits signals to the electronic control unit and also receives signals from the electronic control unit. The electronic control unit is supplied with an alternating voltage of 230 VAC, taken from the power grid, converted to DC voltage of 12 VDC, which is wire-transmitted to hinge housings, mounted inside the body of the oven and connected by means of hinges to the oven door and further through a conductive element connecting the hinge housings and metal structural components of the door of the oven to the electronic user module. Communication system between the door and the body of the oven is characterized in that the electronic control unit is electrically connected to the at least one electronic user module which can receive signals from the user to present his state of the device, wherein between said electronic control unit and electronic user module is enabled signals processing modules, electrically connected to each other via a two-wire power line receivers in the oven door, using existing components of the oven, such as hinge housings, conductive elements connecting the hinge housings with metal structural components of the door of the oven. Signal processing units connected to each other create a communication path between the control units and the user electronic module in the oven door.

The solution according to the invention allows for the use of the existing components and electrical connections of the oven to transmit information. Thus, the functionality of the appliance is improved after minor changes in the design of the oven door.

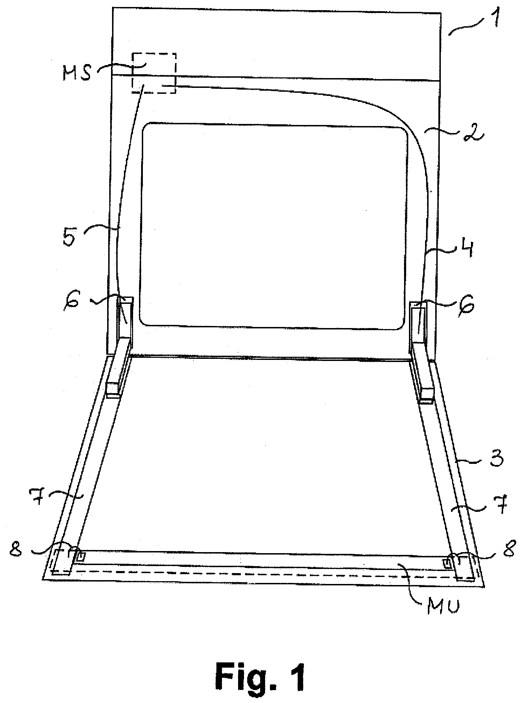

The subject of this invention is described in detail on the embodiment in the figure, where fig. 1 shows a general view of the oven from the front with schematically indicated components of the communication system between the door and the body of the oven, figure 2 shows a block diagram of the communication system between the door and the body of the oven, and fig. 3 is a simplified schematic diagram of the data transmission path.

Oven **1** is equipped with an electronic control unit **MS** controlling the operation of the appliance, located in the body of the oven **2** and an electronic user module **MU** in the door **3** closing the oven cavity, receiving signals from the user and transmitting them to the electronic control unit **MS,** and at the same time, allowing the user to see on the electronic user module **MU** the appliance status sent by the electronic control module **MS.** The oven supply voltage is taken from the power grid 230 VAC and supplied to the electronic control unit **MS,** where it is converted to a DC voltage of 12 VDC and transmitted via electrical conductors **4 and 5** to the hinge housings **6,** mounted inside the oven housing **1** on both sides of the door **3** closing the oven cavity and isolated from the housing of the oven **1.** Hinge housings are hinged to the oven door **3.** Voltage from the hinge housings **6** is further transmitted via a conducting element connecting hinge housings **6** to the metal structural components **7** of the door **3,** electrically connected by means of connecting elements **8** to the electronic user module **MU** installed in the door **3** of the oven **1.** The circuit supplying the electronic control unit **MS** located in the body **2** of the oven **1** and an electronic user module **MU** located in the door **3** of the oven **1,** includes signal processing modules **MPE1** and **MPE2.** Signal processing modules **MPE1** and **MPE2** are electrically connected to each other via the two-wire line **AB** using the existing components of the oven **1** such as: hinge housings **6,** conductive side strips of the oven door **7** and the interconnecting conductive elements, and they create a communication path between the electronic control units **MS** and the electronic user module **MU.** Lines **A** and **B** allow transfer of both power from the electronic control unit **MS** to the electronic user module **MU,** as well as signals that serve as carriers of information, bidirectionally from the electronic control unit **MS** to the electronic user module **MU** and vice versa. Transmission of power supply and information via the same electrical connection, lines **A** and **B** is achieved by applying on the supply voltage of 12V DC, an AC voltage VAC, which is the result of modulation of the carrier signal by the TX signal representing data being transmitted.

Power supply from the electronic control unit **MS** through the filter system **L2, C4** goes to the line (connection) **A.** Line **B** is permanently connected to the 0V potential. In this way, between the lines **A** and **B** there is a constant potential difference, which for the DC gives **A** line voltage relative to line **B** of 12VDC. At the same time, elements **L2** and **C4** block signals of varying waveform, modulated transmission signal, in order to prevent passage of the signal towards the power source and to prevent interference in the supply system. On the signal processing module **MPE1** side, elements **L1, C1** filter out the varying component of the waveform applied on the supply signal so that, after passing through these elements a supply voltage of 12V is obtained, which then supplies the electronic user module **MU.**

Digital data transmitted from the electronic control unit **MS** pass on the **TX input** of the 3-state buffer **U2.** High state, logic state '1' unlocks the buffer and transfers to its output a carrier signal of a defined frequency. In a situation when there is a low state at the input, logic '0', the 3-state buffer is locked and the carrier signal is not transmitted to the buffer output. The buffer output is connected by means of **R2, C5** to line **A** of the transmission path through which the information signal is applied on a constant supply voltage gets to the input of the signal processing module **MPE1.** At the input of the signal processing module **MPE1** the signal, by means of **C3** is filtered out from the waveform constant component and the signal goes further to the input of the electronic user module **MU,** that on the basis of this signal produces binary data signal transmitted by the electronic control unit **MS.**

If data is transmitted by the electronic user module **MU,** the situation is similar, wherein data from the electronic user module **MU** goes to the input of the 3-state buffer **U1,** where the modulation is performed to generate an alternating signal of a defined frequency, which via elements **R1, C2** is further passed to line **A** of the transmission path. Similarly, this signal at the input of the signal processing module **MPE2** is filtered out by **C6** and further goes to the input of the electronic control unit **MS,** where it is converted into a binary signal carrying data transmitted by the electronic user module **MU.**

Both electronic control unit **MS** and the electronic user module **MU** detect collision in the transmission to enable two-way communication in the half-duplex mode.

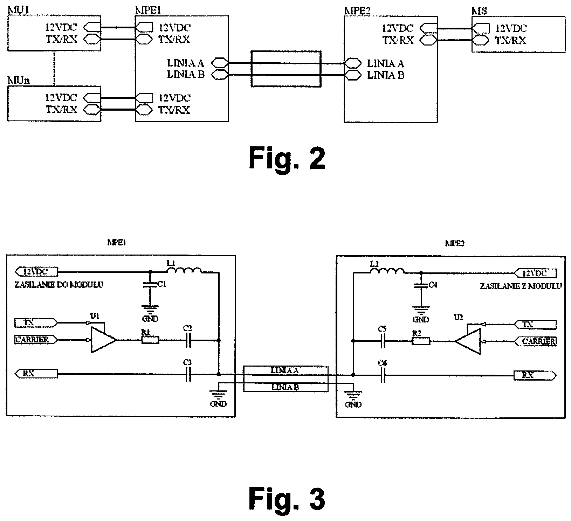

The list of designations in the drawing:
1 - oven,
2 - body of the oven,
3 - door of the oven,
4 - electrical connection between the hinge and the electronic module in line A in Fig. 3.
5 - electrical connection between the hinge and the electronic module in line B in Fig. 3.
6 - hinge housing,
7 - metal structural component of the door,
8 - electrical connection between the metal structural component of the door and the electronic user module MU,
S - electronic control unit controlling the operation of the appliance,
MU - electronic user module receiving signals from the user and/or presenting data on the appliance status, provided by the electronic control unit MS
MPE1 and MPE2- signal processing modules,
A, B - two-wire electric line, connecting signal processing modules MPE1 and MPE2.

## Claims

1. A communication system between a door and a body of an oven, comprising of an electronic control unit located in the body of the oven and an electronic user module, wherein the electronic control unit takes from a the power grid AC voltage of 230 VAC and after conversion to DC voltage of 12 VDC, transmits it to hinge housings, mounted inside the body of the oven and connected to a door of the oven by a hinge joint, and further to the electronic user module through conductive elements connecting the hinge housings and metal structural components of the door of the oven, and moreover the hinge housings are isolated from the body of the oven, **characterized in that,** an electronic control unit (MS) is electrically connected to at least one electronic user module (MU) in the door (3) of the oven (1), and moreover, between the electronic control unit (MS) and the electronic user module (MU) there are signal processing modules (MPE1 and MPE2) electrically connected to each other by a two-wire line (A, B) that transmits a voltage with superimposed signals carrying the transmitted data, creating together with the signal processing modules (MPE1 and MPE2) a communication path between the electronic control unit (MS) and the electronic user module (MU), wherein the two-wire line (A, B) includes the hinge housings (6) and the metal structural components (7) of the door (3) of the oven (1), which are electrically connected to the hinge housings (6) and moreover, the hinge housings (6) and the metal structural components (7) of the door (3) of the oven (1) are electrically isolated from the body (2) of the oven (1).

## Patentansprüche

1. Ein Kommunikationssystem zwischen der Tür und dem Korpus eines Ofens, bestehend aus einer elektronischen Steuereinheit, die sich im Korpus des Ofens befindet, und einem elektronischen Benutzermodul, wobei die elektronische Steuereinheit eine Wechselspannung von 230 VAC aus dem Stromnetz entnimmt und diese nach der Umwandlung in eine Gleichspannung von 12 VDC an Scharniergehäuse überträgt, die im Korpus des Ofens montiert und durch ein Scharniergelenk mit einer Tür des Ofens verbunden sind, und weiter an das elektronische Benutzermodul über leitende Elemente, die die Scharniergehäuse und die Komponenten der Metallstruktur der Ofentür verbinden, und wobei die Scharniergehäuse vom Korpus des Ofens isoliert sind, **dadurch gekennzeichnet, dass** die elektronische Steuereinheit (MS) elektrisch mit mindestens einem elektronischen Benutzermodul (MU) in der Tür (3) des Ofens (1) verbunden ist und außerdem dadurch, dass sich zwischen der elektronischen Steuereinheit (MS) und dem elektronischen Benutzermodul (MU) die Signalverarbeitungsmodule (MPE1 und MPE2) befinden, die elektrisch miteinander durch eine Zweidrahtleitung (A, B) verbunden sind, die eine Spannung mit überlagerten Signalen überträgt, die die übertragenen Daten tragen, wodurch zusammen mit den Signalverarbeitungsmodulen (MPE1 und MPE2) ein Kommunikationspfad zwischen der elektronischen Steuereinheit (MS) und dem elektronischen Benutzermodul (MU) geschaffen wird, wobei die Zweidrahtleitung (A, B) die Scharniergehäuse (6) und Komponenten der Metallstruktur (7) der Tür ( 3) des Ofens (1) umfasst, die elektrisch mit den Scharniergehäusen (6) verbunden sind, und wobei außerdem die Scharniergehäuse (6) und die Komponenten der Metallstruktur (7) der Tür (3) des Ofens (1) vom Korpus (2) des Ofens (1) isoliert sind.

## Revendications

1. Un système de communication entre une porte et le corps d'un four, constitué d'une unité de commande électronique située dans le corps du four et d'un module électronique d'utilisateur, où l'unité de commande électronique prélève du réseau électrique AC une tension de 230 VAC et après la conversion en DC d'une tension de 12 VDC, le transmet à un boîtier articulé, installé dans le corps du four et connecté à la porte du four par un joint articulé et plus loin, au module électronique d'utilisateur par des éléments conducteurs connectant le boîtier articulé et les composants de la structure métallique de la porte du four, et en plus, les boîtiers articulés sont isolés du corps du four, **caractérisé en ce que** l'unité de commande électronique (MS) est électriquement connectée à au moins un module électronique d'utilisateur (MU) dans la porte (3) du four (1), et de plus, entre l'unité de commande électronique (MS) et le module électronique d'utilisateur (MU) des modules de traitement de signal (MPE1 et MPE2) sont présents, chacun étant électriquement connecté l'un à l'autre à l'aide d'une ligne bifilaire (A, B) qui transmet une tension avec des signaux superposés transportant les données transmises, en créant avec les modules de commande électronique (MPE1 et MPE2) une voie de communication entre l'unité de commande électronique (MS) et l'unité électronique d'utilisateur (MU), où la ligne bifilaire (A, B) comprend des boîtiers articulés (6) et des composants de la structure métallique (7) de la porte (3) du four (1), qui sont électriquement connectés taux boîtiers articulés (6) et de plus, les boîtiers articulés (6) et les composants de la structure métallique (7) de la porte (3) du four (1) sont isolés du corps (2) du four (1).
